# EUROPÄISCHE PATENTSCHRIFT

(11) **EP 1 876 348 B1**
(45) Veröffentlichungstag und Bekanntmachung des Hinweises auf die Patenterteilung: **23.09.2009**
(21) Anmeldenummer: 06014036.5
(22) Anmeldetag: 06.07.2006
(51) Int. Cl.: F02M 25/07, F16K 1/20

(54) **Abgasrückführventil**
Exhaust gas recirculation valve
Vanne de recirculation des gaz d'échappement

(43) Veröffentlichungstag der Anmeldung: 09.01.2008
(73) Patentinhaber: Cooper-Standard Automotive (Deutschland) GmbH, 89601 Schelklingen (DE)
(72) Erfinder: Klipfel, Bernhard, 76187 Karlsruhe (DE); Thiery, Christoph, 68549 Ilvesheim (DE)
(74) Vertreter: HOFFMANN EITLE

(56) Entgegenhaltungen:
- EP-A- 1 020 633
- EP-A- 1 526 272
- GB-A- 815 391
- US-A- 3 817 490
- US-A- 4 171 689

## Beschreibung

### Technisches Gebiet

Die Erfindung betrifft ein Abgasrückführ(AGR/EGR)-Ventil nach dem Oberbegriff des Anspruchs 1.

Auf dem Gebiet der Kraftfahrzeugtechnik und insbesondere in Zusammenhang mit der Verbesserung der Emissionswerte eines Verbrennungsmotors, sowie der Senkung des Kraftstoffverbrauchs ist es bekannt, eine Abgasrückführung zu der Frischluftzuführung des Verbrennungsmotors vorzusehen.

### Stand der Technik

Für Abgasrückführventile sind verschiedene Arten der Betätigung bekannt, um das Ventil zu öffnen und zu schließen. Hinsichtlich der Bewegung des Ventilelements, also dem Lösen des Ventilelements von seinem Ventilsitz und der umgekehrten Bewegung zum Schließen des Ventils, besteht ein bekanntes Prinzip darin, das Ventilelement, beispielsweise einen Ventilteller, durch eine translatorische Bewegung von seinem Ventilsitz zu lösen. Diesbezüglich ist es aus der EP 0 856 657 B1 bekannt, einen Nocken vorzusehen, der von einem Antrieb drehend angetrieben wird, und der mit einem translatorisch bewegbaren Ventilstößel derart in Eingriff steht, dass der Ventilstößel bei einer Drehbewegung des Nockens translatorisch bewegt und beispielsweise beim Öffnen von seinem Ventilsitz angehoben wird.

Aus der EP 1 245 820 A1 ist ein weiteres Abgasrückführventil bekannt. Hierbei wird eine Drehbewegung durch eine geeignete Getriebeeinrichtung auf das Ventilelement, beispielsweise einen klappbaren Ventilteller, übertragen, der sich zwischen einer Öffnungs- und Schließstellung, sowie umgekehrt, drehend bewegt.

Die DE 27 03 687 A1 betrifft eine Vorrichtung zur Steuerung einer Abgasrückführung, bei der eine Klappe in einer Saugleitung angeordnet ist und in einer geschlossenen Stellung eine in die Saugleitung ragende Abgasrückführleitung verschließt.

Aus der EP 1 526 272 A1 geht ein Abgasrückführventil hervor, das gemäß dem Oberbegriff des Anspruchs 1 gestaltet ist, und bei dem sich das Ventilelement derart auf einer Kreisbahn bewegt, dass es sich gegen Ende der Schließbewegung gewissermaßen tangential, d.h. weitgehend senkrecht zu der Strömungsrichtung durch den Ventilsitz auf diesen bewegt.

### Darstellung der Erfindung

Der Erfindung liegt die Aufgabe zugrunde, ein für die Verwendung bei Niederdruck-EGR-Systemen verbessertes Abgasrückführventil zu schaffen.

Diese Aufgabe wird durch das Abgasrückführventil nach dem Anspruch 1 gelöst.

Demzufolge weist dieses einen Drehantrieb auf, der ein Nockenelement mit einer Nockenkurve aufweist, und mittels dessen ein um eine Drehachse drehbares Ventilelement betätigbar ist. Im Hinblick auf diese Art eines Antriebs wird auf die Offenbarung der EP 1 526 272 A1 verwiesen. Das neue Abgasrückführventil zeichnet sich dadurch aus, dass das Ventilelement im Rahmen einer Schließbewegung gegen Ende der Schließbewegung in einer Richtung auf einen Ventilsitz bewegbar ist, die weitgehend parallel zu einer Strömungsrichtung durch den Ventilsitz ist. Mit anderen Worten bewegt sich das Ventilelement gegen Ende der Schließbewegung nicht tangential auf den Ventilsitz, mit anderen Worten weitgehend senkrecht zur Strömungsrichtung, sondern wird in der Art einer Klappe weitgehend senkrecht auf den Ventilsitz, mit anderen Worten weitgehend parallel zu einer Strömungsrichtung durch den Ventilsitz auf diesen bewegt. Die Klappe kann auch als "Trompetenventil" bezeichnet werden. Durch die beschriebene Gestaltung kann das Ventilelement selbst sowie dessen Bewegungsbahn äußerst einfach gestaltet werden, und gleichzeitig ein zuverlässiges Schließen einer Abgasrückführleitung sichergestellt werden. Insbesondere eignet sich das erfindungsgemäße Abgasrückführventil für so genannte Niederdruck-Abgasrückführsysteme, bei denen geringe Druckdifferenzen auftreten.

Für die Anbringung des Ventilelements an der Drehachse wird zumindest eine Lasche vorgesehen, die ebenfalls eine besonders einfache Gestaltung gewährleistet.

Erfindungsgemäß weist das Ventilelement ferner zumindest eine Öffnung auf, die im Rahmen einer Öffnungsbewegung öffenbar ist, bevor das Ventilelement von dem Ventilsitz getrennt wird. Der Hintergrund hierfür liegt darin, dass das erfindungsgemäße Abgasrückführventil bevorzugt für Niederdruck-Abgasrückführsysteme eingesetzt wird, bei denen das Öffnen, auch wenn dieses "mit der Strömung" erfolgt, und damit von dieser unterstützt wird, gegen einen Gegendruck erfolgen kann. Ebenso ist es denkbar, dass das Ventilelement "gegen" die Strömung geöffnet wird. Auch in einem solchen Fall kann eine Druckdifferenz, die das Öffnen des Ventils behindern kann, dadurch abgebaut werden, dass zunächst eine Öffnung in dem Ventilelement geöffnet wird, und nachfolgend die Öffnungsbewegung erfolgt.

Schließlich wird ein von einer Lasche, an dem das Ventilelement angebracht ist, getrenntes Verschlusselement für die Öffnung in dem Ventilelement vorgesehen. Das Verschlusselement weist zwei Mitnehmer für die Mitnahme der Lasche oder entlang seines Umfangs zumindest eine Öffnung auf, welche gemäß Anspruch 1 ausgebildet sind.

Bevorzugte Weiterbildungen des erfindungsgemäßen Abgasrückführventils sind in den weiteren Ansprüchen beschrieben.

In vorteilhafter Weise kann die Drehachse, um die das Ventilelement drehbar ist, durchgehend ausgebildet sein. Dies ermöglicht eine besonders einfache Gestaltung der Drehachse. Es versteht sich, dass das Ventilelement auch einseitig gelagert sein kann.

Wenngleich das Ventilelement außerhalb eines Rohrabschnitts vorgesehen sein kann, dessen Ende den Ventilsitz bildet, wird derzeit bevorzugt, den Ventilsitz als Öffnung in einem Rohrabschnitt vorzusehen. Innerhalb des Rohrabschnitts wird ein Ventilsitz gebildet, an dem das Ventilelement zur Anlage gebracht werden kann.

In diesem Zusammenhang wird ferner bevorzugt, das Ventilelement innerhalb des Rohrabschnitts vorzusehen. Dieses kann insbesondere an einem Rand des Rohrabschnitts in geeigneten Aussparungen angeordnet werden, wenn es geöffnet ist, um die Strömung durch den Rohrabschnitt in möglichst geringem Umfang zu beeinflussen. Der genannte Rohrabschnitt kann beispielsweise eine Abgasrückführleitung sein. Ebenso kann das erfindungsgemäße Ventil auch Teil des Saugkanals, mit anderen Worten der Einsaugstrecke eines Verbrennungsmotors sein, in dem/der rückgeführtes Abgas und Frischluft gemischt werden.

Es hat sich ferner als vorteilhaft herausgestellt, das Ventilelement bezüglich der Lasche federnd und beweglich anzubringen. Diese Gestaltung bietet insbesondere für diejenigen Ausführungsformen, bei denen das Ventilelement eine Öffnung aufweist, Vorteile im Hinblick auf die Freigabe der Öffnung unabhängig von der Öffnungsbewegung des Ventilelements.

### Kurze Beschreibung der Zeichnungen

Nachfolgend wird die Erfindung beispielhaft anhand von in den Zeichnungen dargestellten Ausführungsformen näher erläutert. Es zeigen:
- Fig. 1: eine perspektivische Explosionsansicht eines Abgasrückführventils in einer ersten Ausführungsform;
- Fig. 2: eine perspektivische Explosionsansicht des in Fig. 1 gezeigten Abgasrückführventils in geschlossenem Zustand;
- Fig. 3: eine perspektivische Ansicht eines Abgasrückführventils in einer zweiten, erfindungsgemäßen Ausführungsform; und
- Fig. 4: eine schematische Seitenansicht eines Abgasrückführventils in einer dritten, erfindungsgemäßen Ausführungsform.

### Ausführliche Beschreibung bevorzugter Ausführungsformen der Erfindung

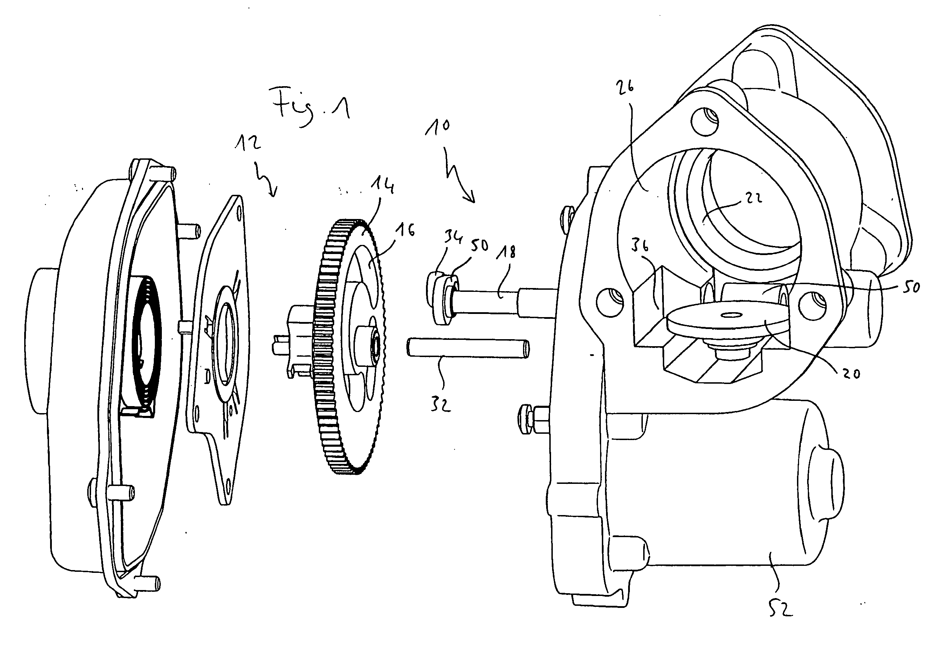

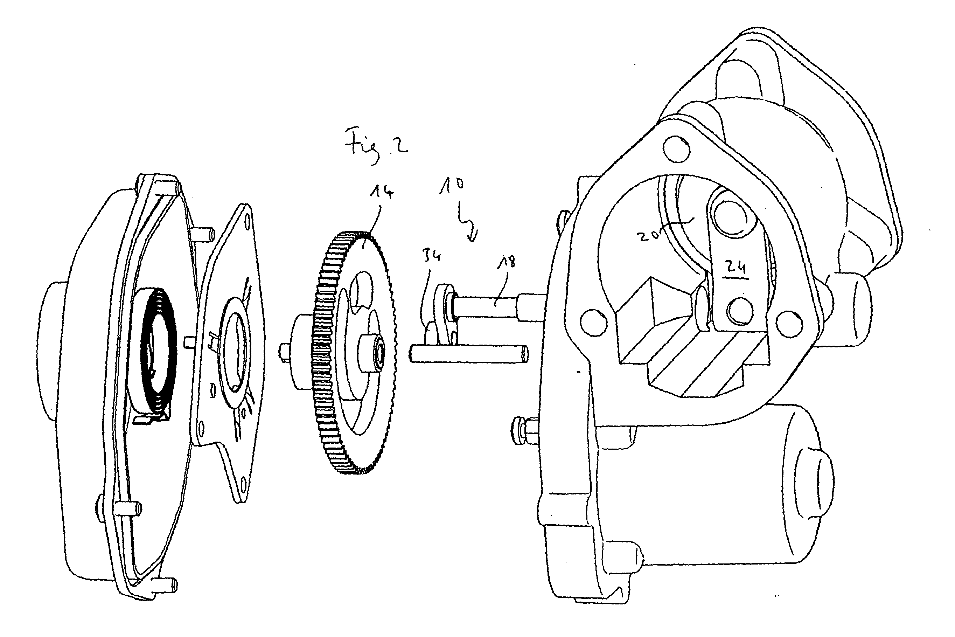

Wie in Fig. 1 zu erkennen ist, weist das Abgasrückführventil 10 einen Drehantrieb 12 mit einem Nockenelement 14 auf, das mit einer Nockenkurve 16 versehen ist. Bei der gezeigten Ausführungsform weist das Nockenelement 14 an seinem Außenumfang Zähne auf, über die es durch einen Antrieb 52, beispielsweise einen Elektromotor, drehend angetrieben wird. Die Achse des Nockenelements 14 ist mit "32" bezeichnet. Wie in der in Bezug genommenen EP 1 526 272 A1 ausführlich beschrieben ist, steht mit der Nockenkurve eine Rolle 34 in Eingriff, die an einem Hebel 50 gelagert ist, der an der Drehachse 18 des Ventilelements 20 angebracht ist. Wie in Fig. 1 zu erkennen, erstreckt sich die Nockenkurve in ihrem Verlauf in Umfangsrichtung von einer Stelle nahe bei der Drehachse 32 zu einer Stelle nahe zu dem mit einer Verzahnung versehenen Außenumfang des Nockenelements 14. Hierdurch bewirkt eine Drehung des Nockenelements 14 eine Drehung des Hebels 50, und damit der Drehachse 18 sowie des Ventilelements 20. Bei der gezeigten Ausführungsform ist das Ventilelement 20 mittels einer Lasche, die besser in Fig. 2 zu erkennen ist, an der Drehachse 18 befestigt. Die Anbringung des Ventilelements 20, das bevorzugt weitgehend kreisförmig ausgebildet ist, erfolgt bevorzugt in dessen Mitte. Wie in Fig. 1 zu erkennen ist, kann die Lasche 24 (vgl. Fig. 2), mit der das Ventilelement 20 an der Drehachse 18 angebracht ist, um die Drehachse 18 umgeschlagen sein (Bereich 50 in Fig. 1).

In der in Fig. 1 gezeigten offenen Stellung des Ventilelements 20 ist dieses in geeigneter Weise in einer Aussparung 36 des Rohrabschnitts 26 untergebracht, so dass es die Strömung durch den Rohrabschnitt 26 nicht nachhaltig beeinflusst. Der Ventilsitz 22 ist in dem Rohrabschnitt 26 zu erkennen und kann konisch abgeschrägt sein.

Im Rahmen der Schließbewegung bewegt sich das Ventilelement 20 gemäß der Darstellung von Fig. 1 im Wesentlichen auf einem Viertelkreis aus der gezeigten "liegenden", offenen Position auf den Ventilsitz 22. Zu Beginn der Schließbewegung bewegt sich das Ventilelement 20 dementsprechend weitgehend senkrecht zu der Strömungsrichtung durch den Ventilsitz 22, die gemäß der Darstellung von Fig. 1 von rechts oben nach links unten oder umgekehrt erfolgt. Gegen Ende der Schließbewegung bewegt sich das Ventilelement 20 weitgehend parallel zu dieser Strömungsrichtung. Es versteht sich jedoch, dass das Ventilelement insgesamt eine Schwenkbewegung ausführt, so dass die genannten "geradlinigen" Richtungen für die Tangente an die Schwenkbewegung an der jeweiligen Stelle gelten.

Dies ist ergänzend anhand der Fig. 2 ersichtlich, die das in Fig. 1 gezeigte Abgasrückführventil 10 in geschlossenem Zustand zeigt. Zunächst ist in Fig. 2 anhand eines Vergleichs mit der Fig. 1 zu erkennen, dass sich das Nockenelement 14 in Richtung des Uhrzeigersinns bewegt hat, so dass auch der Hebel 50 in dieser Richtung gedreht wurde, und das Ventilelement in die Schließstellung gebracht wurde. Die Lasche, mit der das Ventilelement 20 an der Drehachse 18 angebracht ist, ist in Fig. 2 mit "24" bezeichnet. Wie in Fig. 1 und 2 zu erkennen ist, weist der Rohrabschnitt 26 bevorzugt einen weitestgehend kreisrunden Querschnitt auf.

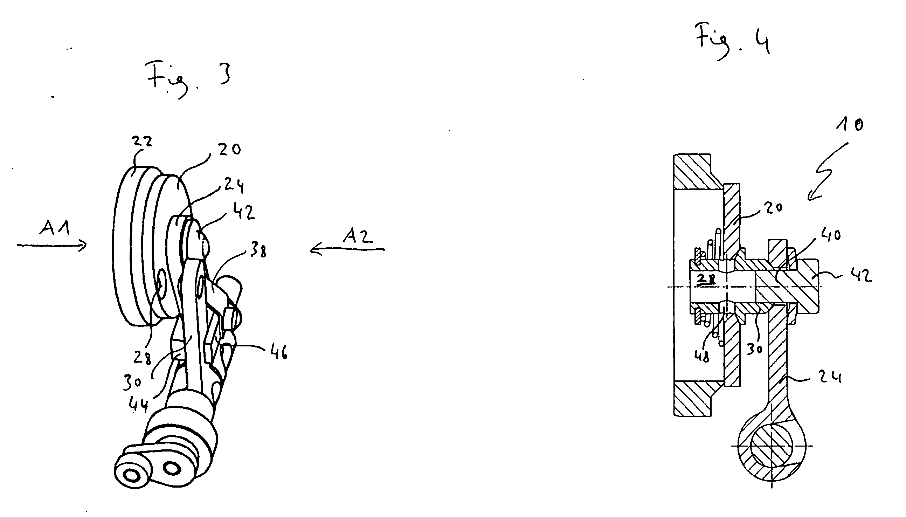

In Fig. 3 ist in einer perspektivischen Ansicht eine zweite Ausführungsform eines erfindungsgemäßen Abgasrückführventils gezeigt, deren Details auch bei der Ausführungsform von Fig. 1 und 2 anwendbar sind. Die Variante von Fig. 3 unterscheidet sich von der Ausführungsform der Fig. 1 und 2 im Wesentlichen dadurch, dass die Anbringung des Ventilelements 20 an der Lasche 24 durch (in dem gezeigten Fall) eine (nicht gezeigte) Kalotte und eine (nicht gezeigte) Feder beweglich gestaltet ist. Das Ventilelement ist mittels einer in der Lasche 24 verschiebbar gelagerten Schraube mit einem Kopf 42 an der Lasche 24 angebracht. Mittels der Kalotte ist das Ventilelement 20 bezüglich der Lasche 24 in gewissem Umfang kippbar. Um ein Öffnen aufgrund des Abgasdruckes in der Strömungsrichtung A1 zu vermeiden, wird die Feder mittels der Schraube in geeigneter Weise justiert. In dem Ventilelement 20 ist bei der gezeigten Ausführungsform eine Öffnung 28 vorhanden, die durch ein getrenntes Verschlusselement 30 verschließbar ist. Dieses Verschlusselement 30 weist ein kugeliges Ende auf. Ferner ist an dem Verschlusselement 30 ein erster Mitnehmer 44 für die Mitnahme der Lasche 24 im Rahmen der Öffnungsbewegung sowie ein zweiter Mitnehmer 46 für die Mitnahme der Lasche 24 im Rahmen der Schließbewegung vorgesehen. Der (nicht gezeigte) Antrieb erfolgt über das Verschlusselement 30. Insbesondere wird dieses Verschlusselement 30 angetrieben, und die an dem Verschlusselement 30 gelagerte Lasche 24 wird durch die Mitnehmer 44 und 46 in der jeweiligen Richtung "mitgenommen", so dass das Ventilelement 20 betätigt wird. Für die Lasche 24 ist ferner eine Zuhaltefeder 38 vorgesehen.

Mit "A1" ist die Strömungsrichtung durch den Ventilsitz 22 bezeichnet. Wenn es sich bei dem Abgasrückführventil 10 um ein Abgasrückführventil in einem Niederdruck-Abgasrückführsystem handelt, kann trotz des Gasstroms in der Richtung A1 auf der gegenüberliegenden Seite, d.h. der rechten Seite gemäß Fig. 3, ein Druck herrschen, der die Öffnungsbewegung des Ventilelements 20 behindert. Dieser Druck kann dadurch abgebaut werden, dass im Rahmen der Öffnungsbewegung zunächst durch Bewegung des Verschlusselements 30 nach rechts die Öffnung 28 geöffnet wird, so dass die Druckdifferenz an dem Ventilelement 20 ausgeglichen wird, und dieses nachfolgend mit geringer Kraft öffenbar ist. Durch die getrennte Öffnung 28 in dem Ventilelement 20 ist ferner die Regelung kleiner Abgasrückführströme möglich. Alternativ zu der Strömungsrichtung A1 kann das Ventil auch in der entgegengesetzten Richtung A2 durchströmt werden. Hierbei wird in gleicher Weise durch das Verschlusselement 30 eine gute Regelgüte für kleine Massendurchsätze erreicht. Ferner kann ein Druckabbau erfolgen, so dass für die Öffnungsbetätigung gegen die Strömungsrichtung ein "schwächerer" Antrieb verwendet werden kann. Bei geschlossenem Ventil ist die Strömungsrichtung A2 insofern vorteilhaft, dass deren Anpresskraft unterstützend wirkt, um jegliche Leckagemengen möglichst gering zu halten.

Fig. 4 schließlich zeigt ein Abgasrückführventil 10 in einer weiteren Ausführungsform. Auch bei dieser Ausführungsform weist das Ventilelement 20 eine Öffnung 28, in diesem Fall in etwa in der Mitte des Ventilelements 20, auf. Die Anbringung des Ventilelements 20 an der Lasche 24 erfolgt bei dieser Ausführungsform durch einen Stift 40 mit einem Kopf 42, wobei an dem Stift 40 ein weitgehend hut- oder U-förmiges Verschlusselement 30 für die Öffnung 28 vorgesehen ist. Zu diesem Zweck weist das Verschlusselement 30 entlang seines Umfangs zumindest eine Öffnung 48 auf. Dieses bewirkt, wenn das Verschlusselement 30 ausgehend von der in Fig. 4 gezeigten Stellung nach rechts bewegt wird, dass die beiden Seiten des Ventilelements 20 durch die Öffnung 48 in dem Verschlusselement 30 und die Öffnung 28 in dem Ventilelement 20 miteinander in Verbindung stehen, so dass in der gleichen Weise, wie für die Ausführungsform von Fig. 3 beschrieben, eine Druckdifferenz abgebaut werden kann und gleichzeitig durch diese Öffnungen eine gute Regelgüte für geringe Massendurchsätze erzielt werden kann.

## Patentansprüche

1. Abgasrückführventil (10) mit einem Drehantrieb (12), der ein Nockenelement (14) mit einer Nockenkurve (16) aufweist und mittels dessen ein um eine Drehachse (18) drehbares Ventilelement (20) betätigbar ist,
**dadurch gekennzeichnet dass**
dieses im Rahmen einer Schließbewegung gegen Ende der Schließbewegung in einer Richtung (A) auf einen Ventilsitz (22) bewegbar ist, die weitgehend parallel zu einer Strömungsrichtung (A) durch den Ventilsitz (22) ist, und dass
das Ventilelement (20) mittels zumindest einer Lasche (24) an der Drehachse (18) angebracht ist, und dass
das Ventilelement (20) zumindest eine Öffnung (28) aufweist, die im Rahmen einer Öffnungsbewegung öffenbar ist, bevor das Ventilelement (20) von dem Ventilsitz (22) getrennt wird, und dass
das Abgasrückführventil (10) ein von der Lasche (24) getrenntes Verschlusselement (30) für die Öffnung (28) in dem Ventilelement (20) aufweist, und dass
das Verschlusselement (30) zwei Mitnehmer (44, 46) für die Mitnahme der Lasche (24) im Rahmen der Öffnungs- bzw. Schließbewegung aufweist, oder
das Verschlusselement (30) entlang seines Umfangs zumindest eine Öffnung (48) aufweist, durch welche die beiden Seiten des Ventilelements (20) in Verbindung bringbar sind.

2. Abgasrückführventil nach Anspruch 1,
**dadurch gekennzeichnet, dass**
die Drehachse (18) durchgehend ausgebildet ist.

3. Abgasrückführventil nach einem der vorangehenden Ansprüche,
**dadurch gekennzeichnet, dass**
der Ventilsitz (22) als Öffnung in einem Rohrabschnitt (26) vorgesehen ist.

4. Abgasrückführventil nach Anspruch 3,
**dadurch gekennzeichnet dass**
das Ventilelement (20) innerhalb des Rohrabschnitts (26) vorgesehen ist.

5. Abgasrückführventil nach einem der vorangehenden Ansprüche,
**dadurch gekennzeichnet, dass**
das Ventilelement (20) bezüglich der Lasche (24) federnd und beweglich angebracht ist.

## Claims

1. Exhaust-gas recirculation valve (10) having a rotary drive (12) which has a cam element (14) with a cam profile (16) and by means of which a valve element (20), which can be rotated about an axis of rotation (18), can be actuated, **characterised in that** within the framework of a closing movement towards the end of the closing movement it can be moved in a direction (A) towards a valve seat (22) which is largely parallel to a flow direction (A) through the valve seat (22), and **in that** the valve element (20) is attached to the axis of rotation (18) by means of at least one plate (24), and **in that** the valve element (20) has at least one opening (28) which can be opened within the framework of an opening movement before the valve element (20) is separated from the valve seat (22), and **in that** the exhaust-gas recirculation valve (10) has a closure element (30), which is separate from the plate (24), for the opening (28) in the valve element (20), and **in that** the closure element (30) has two drivers (44, 46) to catch the plate (24) within the framework of the opening movement or closing movement, or the closure element (30) has along its periphery at least one opening (48), by means of which the two sides of the valve element (20) can be connected.

2. Exhaust-gas recirculation valve according to claim 1, **characterised in that** the axis of rotation (18) is designed to be continuous.

3. Exhaust-gas recirculation valve according to one of the preceding claims, **characterised in that** the valve seat (22) is provided as an opening in a pipe section (26).

4. Exhaust-gas recirculation valve according to claim 3, **characterised in that** the valve element (20) is provided within the pipe section (26).

5. Exhaust-gas recirculation valve according to one of the preceding claims, **characterised in that** the valve element (20) is attached to be resilient and movable with respect to the plate (24).

## Revendications

1. Soupape de recirculation des gaz d'échappement (10), avec un entraînement en rotation (12), présentant un élément formant came (14) avec une courbe de came (16) et au moyen duquel un élément de soupape (20), susceptible de tourner autour d'un axe de rotation (18), est actionnable,
**caractérisée en ce que**, dans le cadre d'un mouvement de fermeture, vers une fin du déplacement de fermeture, pour venir se placer sur un siège de soupape (22), cet élément de soupape (20) est déplaçable dans une direction (A) notablement parallèle à une direction d'écoulement (A) à travers le siège de soupape (22), et **en ce que**
l'élément de soupape (20) est monté sur l'axe de rotation (18) à l'aide d'au moins une patte (24), et **en ce que** l'élément de soupape (20) présente au moins une ouverture (28), susceptible d'être ouverte dans le cadre d'un mouvement d'ouverture, avant que l'élément de soupape (20) soit séparé du siège de soupape (22), et **en ce que**
la soupape de recirculation des gaz d'échappement (10) présente un élément de fermeture (30), séparé de la patte (24), pour l'ouverture (28) ménagée dans l'élément de soupape (20), et **en ce que**
l'élément de fermeture (30) présente deux organes d'entraînement (44, 46), pour l'entraînement de la patte (24) dans le cadre du mouvement d'ouverture ou de fermeture, ou
l'élément de fermeture (30) présente, le long de sa périphérie, au moins une ouverture (48), au moyen de laquelle les deux côtés de l'élément de soupape (20) sont susceptibles d'être reliés.

2. Soupape de recirculation des gaz d'échappement selon la revendication 1, **caractérisée en ce que** l'axe de rotation (18) est traversant.

3. Soupape de recirculation des gaz d'échappement selon l'une des revendications précédentes, **caractérisée en ce que** le siège de soupape (22) est prévu sous forme d'ouverture dans un tronçon tubulaire (26).

4. Soupape de recirculation des gaz d'échappement selon la revendication 3, **caractérisée en ce que** l'élément de soupape (20) est prévu à l'intérieur du tronçon tubulaire (26).

5. Soupape de recirculation des gaz d'échappement selon l'une des revendications précédentes, **caractérisée en ce que** l'élément de soupape (20) est monté élastiquement et de façon déplaçable par rapport à la patte (24).
